# EUROPÄISCHE PATENTSCHRIFT

(11) **EP 4 007 664 B1**
(45) Veröffentlichungstag und Bekanntmachung des Hinweises auf die Patenterteilung: **06.09.2023**
(21) Anmeldenummer: 20767947.3
(22) Anmeldetag: 30.07.2020
(51) Int. Cl.: B21D 5/02, B21D 43/02, B21D 43/18, B25J 9/00

(54) **ÜBERGABEVERFAHREN, DAFÜR AUSGEBILDETES MANIPULATIONSSYSTEM SOWIE BIEGEANLAGE**
TRANSFER METHOD, MANIPULATION SYSTEM DESIGNED THEREFOR, AND BENDING UNIT
PROCÉDÉ DE TRANSFERT, SYSTÈME DE MANIPULATION CONÇU POUR CELUI-CI, ET UNITÉ DE PLIAGE

(30) Priorität: 01.08.2019 AT 506942019
(43) Veröffentlichungstag der Anmeldung: 08.06.2022
(73) Patentinhaber: TRUMPF Maschinen Austria GmbH & Co. KG., 4061 Pasching (AT)
(72) Erfinder: AUZINGER, Michael, 4040 Linz (AT); DENKMEIER, Thomas, 4050 Traun (AT); FLOHR, Andreas, 4020 Linz (AT); GUGLER, Gerhard, 4085 Niederranna (AT); PÖSCHKO, Herbert, 4060 Leonding (AT)
(74) Vertreter: Burger, Hannes
(86) Internationale Anmeldenummer: PCT/AT2020/060283
(87) Internationale Veröffentlichungsnummer: WO 2021/016646

(56) Entgegenhaltungen:
- EP-A1- 0 914 879
- WO-A1-2013/185834
- DE-A1- 3 817 117

## Beschreibung

Die Erfindung betrifft ein Übergabeverfahren zur direkten Übergabe von zumindest einem zu biegenden Blech oder einem aus dem Blech umgeformten Werkstück bei einer Biegeanlage mit zumindest einer Biegemaschine mittels eines Manipulationssystems von einem ersten Manipulator zu zumindest einem zweiten Manipulator, ein dazu ausgebildetes Manipulationssystem sowie eine Biegeanlage mit einem derartigen Manipulationssystem.

Die EP 0 914 879 A1, auf welche der Oberbegriff der Ansprüche 1 und 7 basiert, beschreibt ein Verfahren sowie eine Biegeanlage zum automatischen Biegen von Blechmaterial. Dazu sind ein erster Manipulator und ein zweiter Manipulator vorgesehen, welche auf einer gemeinsamen Führungsanordnung unabhängig voneinander verfahrbar sind, wobei die gemeinsame Führungsanordnung eine parallele Ausrichtung bezüglich der Längserstreckung des Biegebereichs der Biegepresse aufweist. Jeder der Manipulatoren weist einen auf der Führungsanordnung verfahrbar angeordneten Basiskörper und einen daran befindlichen Gelenkarm mit mehreren Armteilen auf. An jedem vom Basiskörper abgewendeten Ende eines jeden Gelenkarms ist ein Greiferelement angeordnet, welches um zwei zueinander orthogonale Achsen verdrehbar ist. Die einzelnen Armteile sind jeweils um horizontale und in paralleler Ausrichtung bezüglich der Längserstreckung der Führungsanordnung ausgerichtete Rotationsachsen verdrehbar. Das zu biegende erste Metallblech wird vom ersten Manipulator in einer Ladezone aufgenommen und ein erster Satz von Biegungen an dem ersten Metallblech während eines ersten Arbeitsschrittes des Biegezyklus durchgeführt. Dabei wird das erste Metallblech unter kontrollierten Bedingungen durch den ersten Manipulator gehalten und bewegt, wobei der zweite Manipulator in Bereitschaft gehalten wird. Das teilweise gebogene erste Metallblech wird am Ende des ersten Satzes von Biegungen zwischen Formelementen der Biegepresse geklemmt gehalten und vom ersten Manipulator freigegeben. Dann wird das eingeklemmt gehaltene erste Metallblech vom zweiten Manipulator aufgenommen, während das gleiche erste Metallblech fest zwischen den Formelementen der Biegepresse gehalten wird. Nachfolgend wird ein zweiter Satz von Biegungen mit Hilfe der Manipulation des zweiten Manipulators am ersten Metallblech durchgeführt. Nach der Beendigung des zweiten Satzes von Biegungen wird das erste Metallblech vom zweiten Manipulator in einer Abladezone abgelegt und freigegeben. Während der Durchführung des zweiten Satzes von Biegungen kann vom ersten Manipulator ein zweites Metallblech von der Ladezone aufgenommen werden.

Die WO 2013/185834 A1 beschreibt eine Mehrfachanordnung von Greifrobotern, bei welchen stets Mehrfachgelenke vorgesehen sind. Bei einem Ausführungsbeispiel gemäß der Fig. 6 sind anstelle eines linearen Förderers zwei Empfangsroboter zur Übernahme von Rohlingen und deren Weitergabe zu weiteren Robotern vorgesehen. Jeder der Empfangsroboter kann sich von einer zentralen gemeinsamen Empfangsposition, an der er einen von der Stanzschere oder Stanzpresse ausgegebenen Rohling empfängt, zu einer seitlichen Förderposition bewegen. Die beiden Empfangsroboter sind ihrerseits bodenseitig angeordnet und die weiteren Roboter befinden sich in einer hängenden Position. Der vom ersten Empfangsroboter weiter zu transportierende Rohling kann nur von einem der weiteren Roboter oder aber von beiden gemeinsam übernommen werden. Gleiches gilt auch für den Transport des Rohlings vom zweiten Empfangsroboter zu den weiteren Robotern. Die ersten weiteren Roboter befinden sich auf einer ersten Seite des Stapelsystems und die zweiten weiteren Roboter befinden sich auf der anderen Seite des Stapelsystems. Die Empfangsroboter halten bei der Übergabe die Rohlinge an deren Unterseite, die weiteren Roboter jeweils an deren Oberseite. Weiters können die Greifroboter überkopf im Dach- oder Deckenbereich feststehend montiert sein. In einem Betriebsmodus können zumindest zwei Roboter gleichzeitig an ein und demselben Werkstück angreifen.

Es beschreibt die DE 38 17 117 A1 eine Vorrichtung zum Handhaben von Werkstücken in einer Pressenstraße mittels zumindest zwei eigenständigen und getrennt voneinander gegenläufig arbeitenden Handhabungsrobotern. Während der eine Roboter das Werkstück aus der einen Bearbeitungsstation entnimmt und in die benachbarte Station transportiert, kehrt der andere Roboter bereits leer zurück. Zugleich erlaubt die Vorrichtung auch eine Minimierung der Wegstrecken und der Fahrgeschwindigkeit. Die beiden Roboter sind getrennt steuerbar, dabei jedoch in ihren Bewegungsabläufen gegenseitig angepasst, um so Kollisionen zu vermeiden. Die Handhabungsarme der Roboter sind zusätzlich um eine lotrecht aufragende Grundachse drehbar am Grundkörper gelagert. Eine direkte Übergabe von Werkstücken von einem der Roboter auf den anderen Roboter ist nicht vorgesehen.

Die EP 2 195 267 B2 beschreibt ein Verfahren zum Entstapeln von plattenförmigen Teilen, insbesondere von Metallblechplatinen, mittels einem im Deckenbereich entlang einer Linearführungseinrichtung hängend verfahrbaren und voneinander unabhängigen Roboterpaar. Jeder der Roboter ist mit seiner Roboterbasis an der Linearführungseinrichtung geführt, wobei an der Roboterbasis jeweils eine Bewegungseinheit mit mehreren Armen daran angeordnet ist. Die gesamte Bewegungseinheit ist an der Roboterbasis um eine eigene Vertikalachse drehbar gelagert. Durch die aufeinander abgestimmten Verschwenkbewegungen und optional möglichen Linearverstellungen wird ein kontinuierlicher Übergabevorgang von einem Teilestapel zu einer Ablegestelle erzielt.

Die US 2018/071806 A1 beschreibt eine Produktionsanlage mit mehreren Arbeitsstationen sowie zwischen diesen befindlichen, ortsfest angeordneten Robotern zum Weitertransport der zu bearbeitenden Werkstücke. Die einzelnen Roboter sind nicht zum direkten miteinander Zusammenwirken und dem gleichzeitigen Erfassen von Werkstücken vorgesehen.

Aus der EP 2 875 878 A1 ist ein Fertigungsprozess bekannt geworden, bei welchem zwei unabhängig voneinander und parallel zueinander verlaufende Bearbeitungsschritte automatisiert und ohne jeglichen manuellen Eingriff durchgeführt werden. Die einzelnen Roboter weisen jeweils eine mehrfache Achsenanordnung auf. Für jede der Fertigungslinien sind eigene Roboter vorgesehen. Ein gleichzeitiges und einander gegenüberliegendes Ergreifen eines Werkstücks von zwei zusammenwirkenden Robotern ist nicht zu entnehmen.

Bei den bislang eingesetzten Manipulatoren mit vier parallel zueinander verlaufenden Achsen und einer dazu in normaler Ausrichtung verlaufenden, fünften Handhabungsachse war keine direkte Übergabe zwischen zwei nebeneinander befindlichen Manipulatoren ohne dem Schritt einer Zwischenablage des zu übergebenden Blechs oder Werkstücks möglich.

Aufgabe der vorliegenden Erfindung war es, die Nachteile des Standes der Technik zu überwinden ein Übergabeverfahren, ein Manipulationssystem und eine ein derartiges Manipulationssystem umfassende Biegeanlage und zur Verfügung zu stellen, mittels derer ein noch rascherer und sicherer Übergabevorgang zwischen zwei zusammenwirkenden Manipulatoren durchführbar ist.

Diese Aufgabe wird durch ein Verfahren zur Übergabe, ein Manipulationssystem und eine ein derartiges Manipulationssystem umfassende Biegeanlage gemäß den Ansprüchen gelöst.

Eine Aufgabe der Erfindung wird durch das Übergabeverfahren gelöst, bei welchem eine direkte Übergabe von zumindest einem zu biegenden Blech oder einem aus dem Blech umgeformten Werkstück bei einer Biegeanlage mit zumindest einer Biegemaschine mittels eines Manipulationssystems von einem ersten Manipulator zu zumindest einem zweiten Manipulator erfolgt und bei dem folgende Schritte ausgeführt werden:
- Bereitstellen einer gemeinsamen Führungsanordnung, welche gemeinsame Führungsanordnung in Richtung ihrer Längserstreckung eine gemeinsame erste Achse für jeden der Manipulatoren definiert und jeder Manipulator entlang der gemeinsamen Führungsanordnung in Richtung der erste Achse autonom verfahrbar ist,
- Bereitstellen des ersten Manipulators und zumindest des zweiten Manipulators, jeder der Manipulatoren umfasst
   - ein Basisgestell,
   - einen ersten Manipulatorarm, wobei jeder der ersten Manipulatorarme am jeweiligen Basisgestell um eine zweite Achse verschwenkbar ist,
   - einen zweiten Manipulatorarm, wobei jeder der zweiten Manipulatorarme an einer vom Basisgestell abgewendeten Seite am jeweiligen ersten Manipulatorarm um eine dritte Achse verschwenkbar ist,
   - einen dritten Manipulatorarm, wobei jeder der dritten Manipulatorarme an einer vom Basisgestell abgewendeten Seite am jeweiligen zweiten Manipulatorarm um eine vierte Achse verschwenkbar ist,
   - wobei die zweiten Achsen, die dritten Achsen und auch die vierten Achsen jeweils ausschließlich eine parallele Ausrichtung bezüglich der ersten Achse aufweisen,
   - eine Halteanordnung, welche Halteanordnung am jeweiligen dritten Manipulatorarm angeordnet oder ausgebildet ist und jede der Halteanordnungen um eine fünfte Achse verdrehbar ist, wobei jede der fünften Achsen eine normale Ausrichtung bezüglich der jeweiligen vierten Achse aufweist,
   - wobei jeder der dritten Manipulatorarme jeweils auf der vom ersten Manipulatorarm abgewendeten Seite am zweiten Manipulatorarm angeordnet ist,
- wobei ein Blech oder ein Werkstück an seiner ersten Seite mit der Halteanordnung des ersten Manipulators erfasst oder ergriffen wird, und
- wobei die Manipulatoren in Richtung der ersten Achse an oder auf der gemeinsamen Führungsanordnung hintereinander und in einer relativen Stellung zueinander angeordnet werden, in welcher der dritte Manipulatorarm des ersten Manipulators auf jener Seite des zweiten Manipulatorarms angeordnet ist, welche dem zweiten Manipulator zugewendet ist und der dritte Manipulatorarm des zweiten Manipulators auf jener Seite des zweiten Manipulatorarms angeordnet ist, welche dem ersten Manipulator zugewendet ist, wobei weiters noch vorgesehen ist,
- dass die Manipulatoren für den Übergabevorgang unmittelbar benachbart zueinander angeordnet werden, und dabei zumindest einer der Manipulatoren in Richtung auf den anderen Manipulator verlagert wird und weiters dabei die dritten Manipulatorarme (26, 26' einander gegenüberliegend sowie deren fünften Achsen jeweils aufeinander zu ragend ausgerichtet werden,
- dass für den Übergabevorgang der erste und der zweite Manipulatorarm des ersten Manipulators auf einer ersten Seite bezüglich einer in Richtung der ersten Achse verlaufend ausgerichteten vertikalen Mittelebene der Führungsanordnung und der erste und zweite Manipulatorarm des zweiten Manipulators auf einer der ersten Seite gegenüberliegenden zweiten Seite der Mittelebene der Führungsanordnung angeordnet werden, wobei die vertikale Mittelebene in einer normalen Richtung bezüglich einer Horizontalebene verläuft, und
- dass das selbe Blech oder Werkstück an seiner der ersten Seite gegenüberliegenden zweiten Seite mit der Halteanordnung des zweiten Manipulators erfasst oder ergriffen wird und das Blech oder das Werkstück von der Halteanordnung des ersten Manipulators freigegeben oder losgelassen wird.

Vorteilhaft ist bei diesen Verfahrensschritten, dass damit durch die spiegelsymmetrische Anordnung der einzelnen Manipulatorarme des ersten Manipulators bezüglich des zweiten Manipulators die Möglichkeit geschaffen wird, die Manipulatoren für die direkte Übergabe zwischen deren Halteanordnungen soweit in deren Verstellrichtung nebeneinander angeordnet werden, dass deren Halteanordnungen einander gegenüberliegend sowie aufeinander zu ragend angeordnet sind. Damit wird bei derartig einfach ausgebildeten Manipulatoren, bei welchen die Schwenkachsen der einzelnen Manipulatorarme eine parallele Ausrichtung bezüglich der von der Führungsanordnung definierten Achse aufweisen, trotzdem die direkte Übergabe von Werkstücken zwischen den Halteanordnungen der Manipulatoren ohne des Zwischenschritts einer Zwischenablage ermöglich. So werden ausreichende Platzverhältnisse geschaffen und es werden somit Kollisionen zwischen den einzelnen Manipulatoren und deren Manipulatorarme beim Übergabevorgang verhindert. Bei Manipulatoren, bei welchen der unmittelbar dem Basisgehäuse zugewendete erste Manipulatorarm auch noch um eine vertikale Drehachse verdrehbar ist, wäre die direkte Übergabe durch ein aufeinander Zudrehen bzw. Zuwenden der Halteanordnungen realisierbar, wobei diese zusätzliche Verdrehbewegung bei den erfindungsgemäßen Manipulatoren mit den stets in paralleler Richtung zur Verstellachse der Führungsanordnung ausgerichteten Schwenkachsen der Manipulatorarme nicht vorgesehen ist.

Sind für den Übergabevorgang der erste und der zweite Manipulatorarm des ersten Manipulators auf einer ersten Seite bezüglich einer in Richtung der ersten Achse verlaufend ausgerichteten vertikalen Mittelebene der Führungsanordnung und der erste und zweite Manipulatorarm des zweiten Manipulators auf einer der ersten Seite gegenüberliegenden zweiten Seite der Mittelebene der Führungsanordnung angeordnet, wird dadurch auf kürzestem Wege eine Stellung der einzelnen Manipulatorarme des ersten und zweiten Manipulators zueinander erzielt. Damit befinden sich auf jeder Seite der Mittelebene die jeweiligen Manipulatorarme des ersten Manipulators sowie des zweiten Manipulators, wodurch eine noch einfachere einander gegenüberliegende Anordnung der Halteanordnungen erzielbar ist.

Weiters ist ein Vorgehen vorteilhaft, bei dem der zweite Manipulatorarm des ersten Manipulators auf jener Seite des ersten Manipulatorarms angeordnet ist, welche dem zweiten Manipulator zugewendet ist. Damit können unnötige Kollisionen zwischen den Basisgestellen der Manipulatoren verhindert werden.

Eine weitere vorteilhafte Vorgehensweise ist dadurch gekennzeichnet, wenn der zweite Manipulatorarm des zweiten Manipulators auf jener Seite des ersten Manipulatorarms angeordnet ist, welche dem ersten Manipulator zugewendet ist. Damit kann eine zusätzliche Distanzierung der beiden Basisgestelle der Manipulatoren im Zuge des Übergabevorgangs erzielt werden.

Vorteilhaft ist auch eine Verfahrensvariante, bei welcher für den Übergabevorgang jeweils die fünften Achsen der dritten Manipulatorarme in paralleler Ausrichtung zueinander angeordnet werden. Durch das parallele Ausrichten der Übergabevorrichtungen zueinander kann ein sicherer Übergabevorgang zwischen den beiden Halteanordnungen erzielt werden.

Eine andere Vorgehensweise zeichnet sich dadurch aus, wenn für den Übergabevorgang jeweils die fünften Achsen der dritten Manipulatorarme in fluchtender Ausrichtung zueinander angeordnet werden. Durch das fluchtende Ausrichten der fünften Achsen der einander zugewendeten Übergabeanordnungen kann so auch bei der übernehmenden Halteanordnung ebenfalls ein sicheres Halten und Ergreifen ermöglicht werden.

Eine weitere vorteilhafte Vorgehensweise ist dadurch gekennzeichnet, dass die erste Achse der Führungsanordnung in paralleler Ausrichtung bezüglich einer von einer Biegemaschine der Biegeanlage definierten Biegelinie ausgerichtet ist. Damit kann stets ohne zusätzliche Querverstellung bezüglich der ersten Achse ein gleicher Abstand des zu transportierenden Werkstücks bzw. Blechs bezüglich der Biegelinie eingehalten werden.

Die Aufgabe der Erfindung wird aber eigenständig auch durch ein Manipulationssystem für eine Biegeanlage umfassend zumindest eine Biegemaschine gelöst. Das Manipulationssystem dient zur direkten Übergabe von zumindest einem zu biegenden Blech oder einem aus dem Blech umgeformten Werkstück von einem ersten Manipulator zu zumindest einem zweiten Manipulator. Das Manipulationssystem umfasst
- eine gemeinsame Führungsanordnung, welche gemeinsame Führungsanordnung in Richtung ihrer Längserstreckung eine gemeinsame erste Achse für jeden der Manipulatoren definiert und jeder Manipulator des Manipulationssystems entlang der gemeinsamen Führungsanordnung in Richtung der erste Achse autonom verfahrbar ist,
- der erste Manipulator und der zumindest eine zweiter Manipulator umfassen j e-weils
   - ein Basisgestell,
   - einen ersten Manipulatorarm, wobei jeder der ersten Manipulatorarme am jeweiligen Basisgestell um eine zweite Achse verschwenkbar ist,
   - einen zweiten Manipulatorarm, wobei jeder der zweiten Manipulatorarme an einer vom Basisgestell abgewendeten Seite am jeweiligen ersten Manipulatorarm um eine dritte Achse verschwenkbar ist,
   - einen dritten Manipulatorarm, wobei jeder der dritten Manipulatorarme an einer vom Basisgestell abgewendeten Seite am jeweiligen zweiten Manipulatorarm um eine vierte Achse verschwenkbar ist,
   - wobei die zweiten Achsen, die dritten Achsen und auch die vierten Achsen jedes Manipulators jeweils ausschließlich eine parallele Ausrichtung bezüglich der ersten Achse aufweisen,
   - eine Halteanordnung, welche Halteanordnung am jeweiligen dritten Manipulatorarm angeordnet oder ausgebildet ist und jede der Halteanordnungen um eine fünfte Achse verdrehbar ist, wobei jede der fünften Achsen eine normale Ausrichtung bezüglich der jeweiligen vierten Achse aufweist, wobei
   - jeder der dritten Manipulatorarme jeweils auf der vom ersten Manipulatorarm abgewendeten Seite am zweiten Manipulatorarm angeordnet ist, und wobei
- der erste Manipulator und der zumindest eine zweite Manipulator in Richtung der ersten Achse hintereinander an oder auf der gemeinsamen Führungsanordnung angeordnet sind,
- wobei der dritte Manipulatorarm des ersten Manipulators auf jener Seite des zweiten Manipulatorarms angeordnet ist, welche dem zweiten Manipulator zugewendet ist, und
- wobei der dritte Manipulatorarm des zweiten Manipulators auf jener Seite des zweiten Manipulatorarms angeordnet ist, welche dem ersten Manipulator zugewendet ist, wobei weiters vorgesehen ist
- dass die Manipulatoren für den Übergabevorgang unmittelbar benachbart zueinander angeordnet sind, und dabei die dritten Manipulatorarme einander gegenüberliegend sowie deren fünfte Achsen (29, 29') jeweils aufeinander zu ragend ausgerichtet sind, und
- dass für den Übergabevorgang der erste und der zweite Manipulatorarm des ersten Manipulators auf einer ersten Seite bezüglich einer in Richtung der ersten Achse verlaufend ausgerichteten vertikalen Mittelebene der Führungsanordnung und der erste und zweite Manipulatorarm des zweiten Manipulators auf einer der ersten Seite gegenüberliegenden zweiten Seite der Mittelebene der Führungsanordnung angeordnet sind, wobei die vertikale Mittelebene in einer normalen Richtung bezüglich einer Horizontalebene verläuft.

Der dadurch erzielte Vorteil liegt darin, dass damit durch die spiegelsymmetrische Anordnung der einzelnen Manipulatorarme des ersten Manipulators bezüglich der Manipulatorarme des zweiten Manipulators die Möglichkeit geschaffen wird, die Manipulatoren für die direkte Übergabe zwischen deren Halteanordnungen soweit in deren Verstellrichtung nebeneinander angeordnet werden, dass deren Halteanordnungen einander gegenüberliegend sowie aufeinander zu ragend angeordnet sind. Damit wird bei derartig einfach ausgebildeten Manipulatoren, bei welchen die Schwenkachsen der einzelnen Manipulatorarme eine parallele Ausrichtung bezüglich der von der Führungsanordnung definierten Achse aufweisen, trotzdem die direkte Übergabe von Werkstücken zwischen den Halteanordnungen der Manipulatoren ohne des Zwischenschritts einer Zwischenablage ermöglich. So werden ausreichende Platzverhältnisse geschaffen und es werden somit Kollisionen zwischen den einzelnen Manipulatoren und deren Manipulatorarme beim Übergabevorgang verhindert. Bei Manipulatoren, bei welchen der unmittelbar dem Basisgehäuse zugewendete erste Manipulatorarm auch noch um eine vertikale Drehachse verdrehbar ist, wäre die direkte Übergabe durch ein aufeinander Zudrehen bzw. Zuwenden der Halteanordnungen realisierbar, wobei diese zusätzliche Verdrehbewegung bei den erfindungsgemäßen Manipulatoren mit den stets in paralleler Richtung zur Verstellachse der Führungsanordnung ausgerichteten Schwenkachsen der Manipulatorarme nicht vorgesehen ist.

Sind für den Übergabevorgang der erste und der zweite Manipulatorarm des ersten Manipulators auf einer ersten Seite bezüglich einer in Richtung der ersten Achse verlaufend ausgerichteten vertikalen Mittelebene der Führungsanordnung und der erste und zweite Manipulatorarm des zweiten Manipulators auf einer der ersten Seite gegenüberliegenden zweiten Seite der Mittelebene der Führungsanordnung angeordnet, wird dadurch auf kürzestem Wege eine Stellung der einzelnen Manipulatorarme des ersten und zweiten Manipulators zueinander erzielt. Damit befinden sich auf jeder Seite der Mittelebene die jeweiligen Manipulatorarme des ersten Manipulators sowie des zweiten Manipulators, wodurch eine noch einfachere einander gegenüberliegende Anordnung der Halteanordnungen erzielbar ist.

Weiters kann es vorteilhaft sein, wenn der zweite Manipulatorarm des ersten Manipulators auf jener Seite des ersten Manipulatorarms angeordnet ist, welche dem zweiten Manipulator zugewendet ist. Damit können unnötige Kollisionen zwischen den Basisgestellen der Manipulatoren verhindert werden.

Eine andere Ausführungsform zeichnet sich dadurch aus, dass der zweite Manipulatorarm des zweiten Manipulators auf jener Seite des ersten Manipulatorarms angeordnet ist, welche dem ersten Manipulator zugewendet ist. Damit kann eine zusätzliche Distanzierung der beiden Basisgestelle der Manipulatoren im Zuge des Übergabevorgangs erzielt werden.

Eine weitere mögliche Ausführungsform hat die Merkmale, dass die fünfte Achse des ersten Manipulators in einer ersten Normalebene bezüglich der ersten Achse verlaufend angeordnet ist und die erste Normalebene vom Basisgestell des ersten Manipulators in Richtung der erst en Achse sowie in Richtung auf den zweiten Manipulator um einen ersten Abstand beabstandet angeordnet ist. Dadurch kann ausreichend Platz zwischen der fünften Achse der Halteanordnung und der randseitigen Begrenzung des Basisgestells geschaffen werden. Damit kann auch im Bereich des zweiten Manipulators eine Beabstandung bzw. Distanzierung der fünften Achse vom umfänglichen Randbereich des Basisgestells erzielt werden.

Eine weitere Ausbildung sieht vor, dass die fünfte Achse des zweiten Manipulators in einer zweiten Normalebene bezüglich der ersten Achse verlaufend angeordnet ist und die zweite Normalebene vom Basisgestell des zweiten Manipulators in Richtung der ersten Achse sowie in Richtung auf den ersten Manipulator um einen zweiten Abstand beabstandet angeordnet ist. Damit können die beiden Manipulatoren im Bereich von deren Halteanordnungen kollisionsfrei aufeinander zu verstellt werden und trotzdem die Halteanordnungen einander gegenüberliegend für den Übergabevorgang positioniert werden.

Eine andere Ausführungsform zeichnet sich dadurch aus, dass eine Summe des ersten Abstands zuzüglich des zweiten Abstands zumindest einer größten Abmessung eines der dritten Manipulatorarme in Richtung der ersten Achse entspricht. Durch diese Abmessungswahl kann ein sicheres und kollisionsfreies einander gegenüberliegendes Anordnen der beiden Manipulatorarme erzielt werden.

Die Aufgabe der Erfindung wird aber eigenständig auch durch eine Biegeanlage umfassend zumindest eine Biegemaschine und ein erfindungsgemäß ausgebildetes Manipulationssystem zur direkten Übergabe von zumindest einem zu biegenden Blech oder einem aus dem Blech umgeformten Werkstück von einem ersten Manipulator zu zumindest einem zweiten Manipulator gelöst.

Der dadurch erzielte Vorteil liegt darin, dass damit eine Biegeanlage geschaffen wird, bei welcher mittels des Manipulationssystems eine direkte Übergabe von Werkstücken zwischen den Manipulatoren ohne zusätzlichen Zwischenablageschritt ermöglicht wird. Damit wird die produktive Biegezeit der Biegemaschine erhöht, da zusätzliche Zwischenablagevorgänge nicht mehr erforderlich sind.

Zum besseren Verständnis der Erfindung wird diese anhand der nachfolgenden Figuren näher erläutert.

Es zeigen jeweils in stark vereinfachter, schematischer Darstellung:
- Fig. 1: eine Biegeanlage mit einem Manipulationssystem zur direkten Übergabe eines Werkstücks oder Blechs von einem ersten Manipulator zu einem zweiten Manipulator, in Seitenansicht;
- Fig. 2: die Manipulatoren des Manipulationssystems nach Fig. 1, in einer in Richtung der ersten Achse voneinander beabstandeten Stellung, in Ansicht;
- Fig. 3: die Manipulatoren des Manipulationssystems in deren Übergabestellung zueinander, in Ansicht;
- Fig. 4: die Manipulatoren des Manipulationssystems in deren Übergabestellung zueinander, in Seitenansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

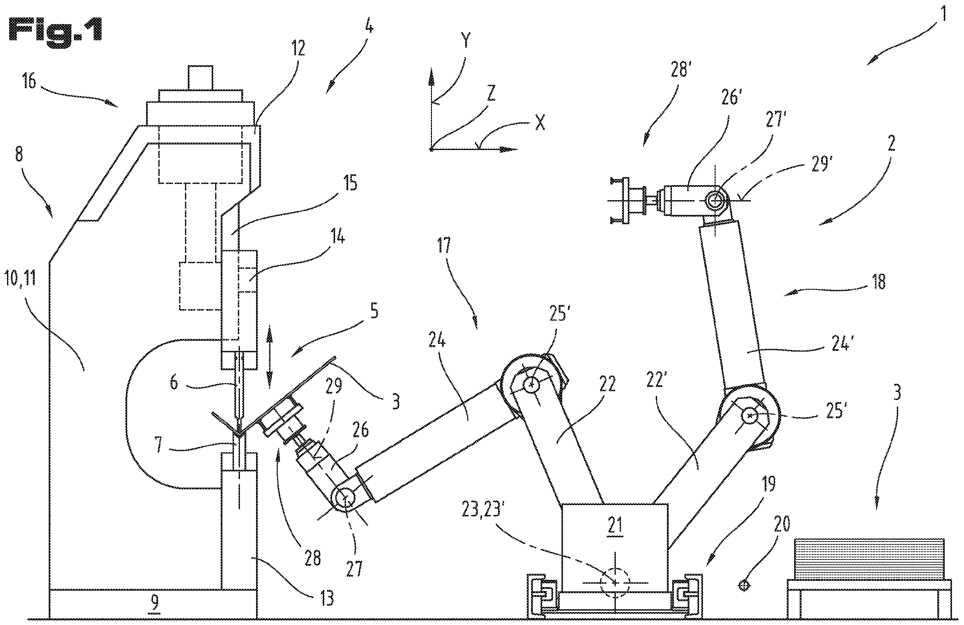

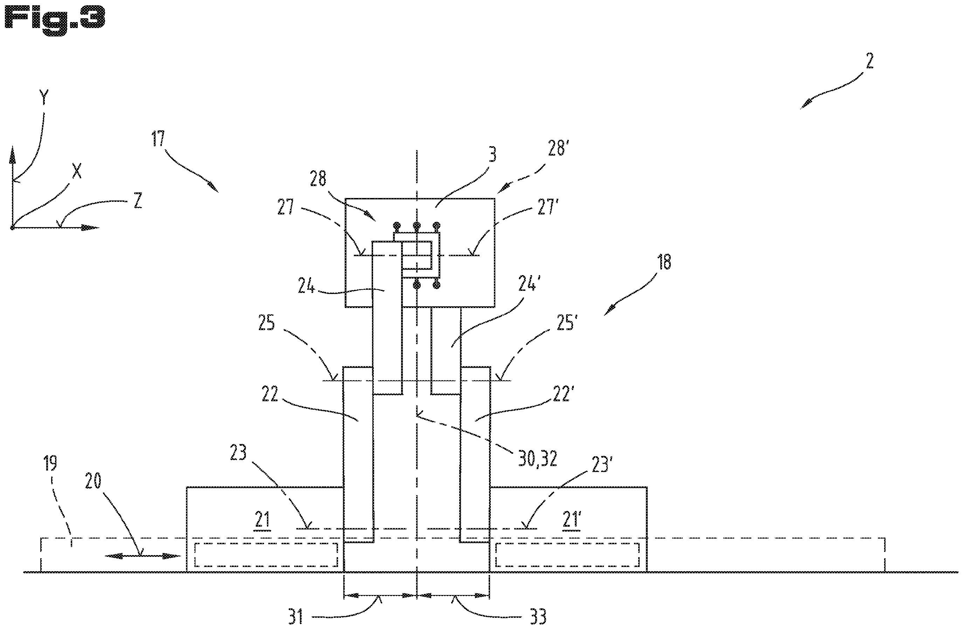

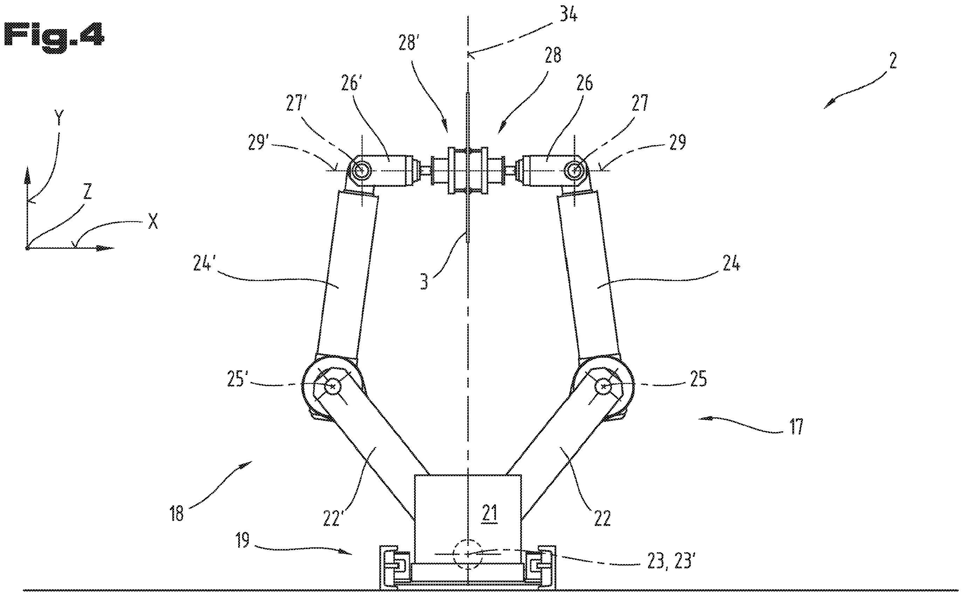

In den Fig. 1 bis 4 ist eine Biegeanlage 1 mit einem vereinfacht dargestellten Manipulationssystem 2 gezeigt. Die Biegeanlage 1 ist im vorliegenden Fall insbesondere für das Freibiegen von aus Blech zu fertigenden Werkstücken 3 mittels Gesenkbiegen ausgebildet, wobei diese auch als Fertigungsanlage bezeichnet werden kann. Als Ausgangsmaterial wird zumeist ein metallischer Werkstoff verwendet, welcher in seinem unverformten Zustand als Flachmaterial bzw. Flachelement bezeichnet werden kann. In der Fig. 1 wurden einige Anlagenkomponenten der Biegeanlage 1 der besseren Übersichtlichkeit halber nicht oder nur stilisiert dargestellt.

Die im vorliegenden Fall für das Biegen eingesetzte Biegeanlage 1 umfasst zumindest eine Biegemaschine 4, im vorliegenden Ausführungsbeispiel eine Biegepresse, insbesondere eine Abkantpresse oder Gesenkbiegepresse, zur Herstellung der Werkstücke 3 oder Werkteile zwischen zumindest einem relativ zueinander verstellbaren Biegewerkzeug 5. Der Einfachheit wurde nur eine Biegemaschine 4 dargestellt, wobei auch mehrere derselben vorgesehen sein können.

Es wäre aber auch unabhängig davon möglich, die Biegemaschine 4 als sogenannte Schwenkbiegemaschine oder Schwingbiegemaschine auszubilden. In diesem Fall kann die Biegeanlage 1 auch als Schwenkbiegeanlage oder Schwingbiegeanlage bezeichnet werden. Dabei umfasst Biegemaschine 4 eine Presse, die unter anderem zur klemmenden Halterung der aus dem Blech zu fertigenden Werkstücke 3 oder Werkteile zwischen einem relativ zueinander verstellbaren Klemmwerkzeug ausgebildet ist. Das Klemmwerkzeug umfasst dann zumindest eine untere Klemmbacke und eine damit zusammenwirkende obere Klemmbacke. Die untere Klemmbacke kann auch als Unterwange oder Gegenhalter und die obere Klemmbacke kann auch als Oberwange oder Niederhalter bezeichnet werden. Die untere Klemmbacke kann auch als einziger Stempel durchgängig ausgebildet sein. Zur Durchführung des Biegevorgangs umfasst die Biegemaschine 4 der Biegeanlage 1 auch noch eine Biegeeinheit, welche auch als Abkanteinheit oder Umformeinheit bezeichnet werden kann. Diese Ausbildungsmöglichkeit der Biegemaschine 4 ist nur beschrieben worden, jedoch ist diese nicht näher dargestellt. Die Art und Ausbildung der Biegemaschine 4 ist bei dem nachfolgend beschriebenen Verfahrensablauf nicht von wesentlicher Bedeutung. Das Hauptaugenmerk liegt eher auf der Ausbildung des Manipulationssystems 2.

Das Biegewerkzeug 5 der hier gezeigten und als Biegepresse ausgebildeten Biegemaschine 4 umfasst im vorliegenden Ausführungsbeispiel zumindest einen Biegestempel 6, zumeist jedoch mehrere Biegestempel 6, und zumindest ein Biegegesenk 7, zumeist jedoch mehrere damit zusammenwirkende Biegegesenke 7. Der zumindest eine Biegestempel 6 ist dabei oberhalb des zu fertigenden Werkstücks 3 an der Biegemaschine 4 angeordnet und dort auch entsprechend gehalten, insbesondere geklemmt. Auch das zumindest eine Biegegesenk 7 ist an der Biegemaschine 4 gehalten, insbesondere daran geklemmt gehalten.

Als Koordinatensystem wird bei derartigen Biegemaschinen 4 grundsätzliches als "X"-Richtung jene bezeichnet, welche in einer Horizontalebene sowie in normaler Ausrichtung bezüglich der Längserstreckung des Biegewerkzeugs 5, insbesondere dessen Biegestempel 6 sowie Biegegesenk 7 verläuft. Somit ist dies jene Richtung, welche auch der Zufuhrrichtung oder der Entnahmerichtung entspricht. Als "Y"-Richtung wird die Vertikalrichtung verstanden, welche somit in Höhenrichtung des Biegewerkzeugs 5 und weiters in normaler Richtung bezüglich der Horizontalebene verläuft. Schließlich wird als "Z"-Richtung jene Richtung verstanden, welche in Längsrichtung bzw. in der Längserstreckung des Biegewerkzeugs 5, insbesondere dessen Biegestempel 6 sowie Biegegesenk 7, verläuft. Damit ist auch die Längserstreckung der vom Biegewerkzeug 5 definierten Biegekante oder Biegelinie in der "Z"-Richtung verlaufend ausgerichtet.

Die Biegemaschine 4 umfasst ein Maschinengestell 8, welches beispielsweise eine Bodenplatte 9 und vertikal davon aufragende und zueinander in Querrichtung beabstandet und parallel zueinander ausgerichtete Seitenwangen 10, 11 aufweist. Diese sind bevorzugt durch einen massiven, beispielsweise aus einem Blechformteil gebildeten Querverband 12 an ihren von der Bodenplatte 9 distanzierten Endbereichen miteinander verbunden.

Die Seitenwangen 10, 11 können zur Bildung eines Freiraums für das Umformen des Werkstücks 3 etwa C - förmig ausgebildet sein. Das Biegewerkzeug 5 ist an Pressbalken 13, 14 angeordnet und auch gehalten. Zumeist ist der untere Pressbalken 13 ortsfest angeordnet und kann auch als Presstisch bezeichnet werden. Der hier obere Pressbalken 14 ist in Linearführungen 15 geführt gelagert und ist relativ bezüglich des unteren Pressbalkens 13 zur Durchführung des Biegevorgangs relativ verstellbar. Dazu ist eine Antriebsanordnung 16 vorgesehen. Auf die nähere Beschreibung und Darstellung einer Biegemaschinen-Steuerungseinheit, eines Eingabeterminals sowie der Energieversorgung wurde der besseren Übersichtlichkeit halber verzichtet. Auf weitere für den Betrieb einer derartigen Biegemaschine 4 erforderliche Details, wie beispielsweise Zufuhrvorrichtungen oder dergleichen, wird in der gegenständlichen Beschreibung zur Vermeidung einer unnötigen Länge der Beschreibung ebenfalls verzichtet.

Das Manipulationssystem 2 umfasst einen ersten Manipulator 17, zumindest einen zweiten Manipulator 18 und eine Führungsanordnung 19, auf oder an welcher die Manipulatoren 17, 18 entlang dieser verstellbar geführt sind. Die Verstellbewegung kann autonom erfolgen, wobei auch eine Übertragung von Antriebsenergie und/oder Fahr- und/oder Verstellbefehlen von der Führungsanordnung 19 auf die Manipulatoren 17, 18 möglich ist. Die Führungsanordnung 19 kann z.B. Führungsschienen, Führungsstange oder dergleichen umfassen, welche bevorzugt geradlinig verlaufend ausgerichtet sind. Die Führungsanordnung 19 definiert in Richtung ihrer Längserstreckung eine erste Achse 20. Bevorzugt weist die Führungsanordnung 19 und damit auch die erste Achse 20 eine in paralleler Richtung bezüglich einer vom Biegewerkzeug 5 oder dem Klemmwerkzeug definierten Biegelinie oder Biegekante auf und ist somit auch parallel bezüglich der "Z"-Achse des Koordinatensystems verlaufend ausgerichtet.

Nachfolgend werden die wesentlichsten Bauteilkomponenten der Manipulatoren 17, 18 beschrieben, wobei deren Bauteilkomponenten grundsätzlich gleichartig ausgebildet sind, sich jedoch die Anordnung an den Manipulatoren 17, 18 zueinander unterscheiden kann. Jene Bauteile des ersten Manipulators 17 werden ohne Hochkomma bzw. ohne " ' " und jene des zweiten Manipulators 18 werden mit Hochkomma bzw. mit " ' " gekennzeichnet.

Jeder der Manipulatoren 17, 18 umfasst ein Basisgestell 21, 21' welches z.B. mittels Rädern und/oder eigenen Führungselementen an der Führungsanordnung 19 verstellbar geführt ist. Auf die nähere Darstellung und Beschreibung von Antriebsmitteln wurde verzichtet, da dies hinlänglich bekannt ist und gemäß dem bekannten Stand der Technik frei gewählt werden kann.

Am Basisgestell 21, 21' ist jeweils ein erster Manipulatorarm 22, 22` um jeweils eine zweite Achse 23, 23' verschwenkbar daran gelagert. An jedem vom Basisgestell 21, 21' abgewendeten Endbereich des ersten Manipulatorarms 22, 22` ist jeweils ein zweiter Manipulatorarm 24, 24` um eine dritte Achse 25, 25` verschwenkbar gelagert. Weiters ist jeweils noch ein dritter Manipulatorarm 26, 26` vorgesehen, wobei jeder der dritten Manipulatorarme 26, 26` an einer vom Basisgestell 21, 21' abgewendeten Seite am jeweiligen zweiten Manipulatorarm 24, 24` um eine vierte Achse 27, 27' verschwenkbar ist. Dabei weisen die zweiten Achsen 23, 23', die dritten Achsen 25, 25` und auch die vierten Achsen 27, 27' jeweils und ausschließlich eine parallele Ausrichtung bezüglich der ersten Achse 20 auf. So sind die zuvor angeführten Achsen auch parallel bezüglich der Biegelinie der Biegemaschine 4 ausgerichtet.

Die ersten Manipulatorarme 22, 22` können am jeweiligen Basisgestell 21, 21' entweder zentral daran oder aber auch seitlich desselben angeordnet sein, wie dies beim vorliegenden Ausführungsbeispiel gezeigt ist.

An jedem der dritten Manipulatorarme 26, 26` ist weiters jeweils eine Halteanordnung 28, 28` angeordnet bzw. vorgesehen. Die Halteanordnung 28, 28` kann z.B. als Greifzange, Unterdrucksauger, Haltemagnet oder dergleichen ausgebildet sein. Jede der Halteanordnungen 28, 28` ist um eine fünfte Achse 29, 29` verdrehbar am jeweiligen dritten Manipulatorarm 26, 26` gelagert. Jede der fünften Achsen 29, 29` weist eine normale Ausrichtung bezüglich der jeweiligen vierten Achse 27, 27' auf und ist damit rechtwinkelig zu dieser ausgerichtet. Durch diese Dreh- bzw. Verschwenk-Möglichkeit kann das an der Halteanordnung 28, 28` gehaltene Blech oder Werkstück 3 beispielsweise um die eigene Achse verdreht werden.

Weiters ist bei jedem der Manipulatoren 17, 18 vorgesehen, dass jeder der dritten Manipulatorarme 26, 26` jeweils auf der vom ersten Manipulatorarm 22, 22` abgewendeten Seite am zweiten Manipulatorarm 24, 24` angeordnet ist.

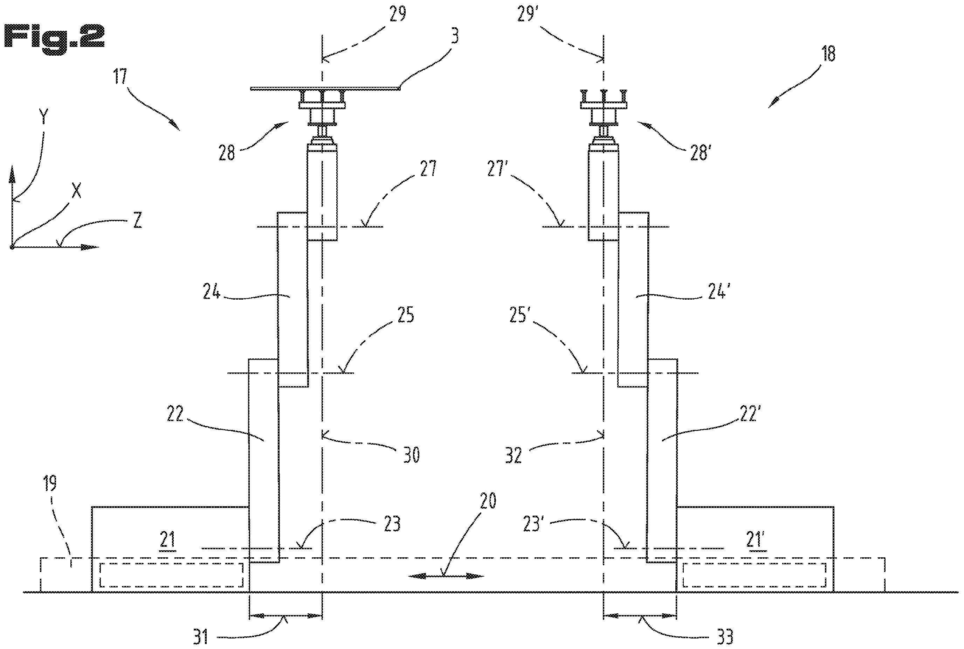

Wie nun besser aus der Fig. 2 zu ersehen ist, sind in Richtung der ersten Achse 20 gesehen, die Manipulatoren 17, 18 hintereinander an oder auf der gemeinsamen Führungsanordnung 19 angeordnet und entlang dieser relativ dazu verlagerbar. Weiters erfolgt eine spiegelbildliche Anordnung der einzelnen Manipulatorarme zueinander, wobei dies bezüglich einer zwischen den beiden Manipulatoren 17, 18 fiktiven Normalebene zur ersten Achse 20 erfolgt. Es ist somit der dritte Manipulatorarm 26 des ersten Manipulators 17 auf jener Seite des zweiten Manipulatorarms 24 angeordnet, welche dem zweiten Manipulator 18 zugewendet ist. Gleiches gilt aber auch für den dritte Manipulatorarm 26` des zweiten Manipulators 18. Der dritte Manipulatorarm 26` des zweiten Manipulators 18 ist somit auf jener Seite des zweiten Manipulatorarms 24` angeordnet, welche dem ersten Manipulator 17 zugewendet ist.

Der zweite Manipulatorarm 24 des ersten Manipulators 17 ist auf jener Seite seines ersten Manipulatorarms 22 angeordnet, welche dem zweiten Manipulator 18 zugewendet ist. Es ist auch der zweite Manipulatorarm 24` des zweiten Manipulators 18 auf jener Seite seines ersten Manipulatorarms 22` angeordnet, welche dem ersten Manipulator 17 zugewendet ist. Damit befindet sich auch jeder der dritten Manipulatorarme 26, 26` nicht auf der gleichen Seite wie die ersten Manipulatorarme 22, 22`. Es erfolgt stets eine Anordnung in Richtung auf den jeweils gegenüberliegend befindlichen Manipulator 18 bzw. 17.

Es ist noch dargestellt, dass die fünfte Achse 29 des ersten Manipulators 17 in einer ersten Normalebene 30 bezüglich der ersten Achse 20 verlaufend angeordnet ist. Weiters ist vorgesehen, dass die erste Normalebene 30 vom Basisgestell 21 des ersten Manipulators 17 in Richtung der ersten Achse 20 sowie in Richtung auf den zweiten Manipulator 18 um einen ersten Abstand 31 beabstandet angeordnet ist.

Die fünfte Achse 29 des zweiten Manipulators 18 ist in einer zweiten Normalebene 32 bezüglich der ersten Achse 20 verlaufend angeordnet. Es ist weiters die zweite Normalebene 32 vom Basisgestell 21' des zweiten Manipulators 18 in Richtung der ersten Achse 20 sowie in Richtung auf den ersten Manipulator 17 um einen zweiten Abstand 33 beabstandet angeordnet.

Um eine einander gegenüberliegende Anordnung der beiden Halteanordnungen 28, 28` für den Übergabevorgang zu ermöglichen, ist zumindest einer der Manipulatoren 17, 18 in Richtung auf den anderen der Manipulatoren 18, 17 zu verlagern. Durch die jeweils bezüglich des Basisgestells 21, 21' außenseitige und dem gegenüberliegend befindlichen Manipulator 17, 18 befindliche Lage der dritten Manipulatorarme 26, 26` können die Manipulatoren 17, 18 unmittelbar benachbart zueinander angeordnet werden.

Eine Summe des ersten Abstands 31 zuzüglich des zweiten Abstands 33 entspricht zumindest einer größten Abmessung eines der dritten Manipulatorarme 26, 26` in Richtung der ersten Achse 20.

Die Stellung der Manipulatoren 17, 18 und deren Manipulatorarme vor und während des Übergabevorgangs ist am besten aus den Fig. 2 bis 4 zu ersehen. Ist beispielsweise von der Halteanordnung 28 des ersten Manipulators 17 ein Werkstück 3 oder Blech erfasst und soll dieses direkt und ohne Zwischenablage an die Halteanordnung 28` des zweiten Manipulators 18 übergeben werden, sind die dritten Manipulatorarme 26, 26` einander gegenüberliegend sowie aufeinander zu ragend auszurichten. Dann kann von der Halteanordnung 28` des zweiten Manipulators 18 ebenfalls das selbe Werkstück 3 oder Blech erfasst werden. Das Erfassen bzw. Halten der Halteanordnung 28 des ersten Manipulators 17 erfolgt zumeist an einer ersten Seite und das Erfassen bzw. Halten der Halteanordnung 28` des zweiten Manipulators 18 auf der gegenüberliegenden zweiten Seite. Wird das Werkstück 3 oder Blech auch von der Halteanordnung 28` des zweiten Manipulators 18 gehalten, kann das Werkstück 3 oder Blech von der Halteanordnung 28 des ersten Manipulators 17 freigegeben werden. Damit ist der direkte Übergabevorgang erfolgt. Eine Übergabe von der Halteanordnung 28` des zweiten Manipulators 18 an die der Halteanordnung 28 des ersten Manipulators 17 erfolgt in gleicher Weise. Bevorzugt können für den Übergabevorgang jeweils die fünften Achsen 29, 29` der dritten Manipulatorarme 26, 26` in einer parallelen Ausrichtung zueinander angeordnet werden. Vorteilhaft kann es weiters sein, wenn für den Übergabevorgang jeweils die fünften Achsen 29, 29` der dritten Manipulatorarme 26, 26` in fluchtender Ausrichtung zueinander angeordnet werden.

Für den Übergabevorgang ist der erste Manipulatorarm 22 und der zweite Manipulatorarm 24 des ersten Manipulators 17 auf einer ersten Seite bezüglich einer in Richtung der ersten Achse 20 verlaufend ausgerichteten vertikalen Mittelebene 34 der Führungsanordnung 19 angeordnet.

Der erste Manipulatorarm 22` und der zweite Manipulatorarm 24` des zweiten Manipulators 18 können hingegen auf einer der ersten Seite gegenüberliegenden zweiten Seite der Mittelebene 34 der Führungsanordnung 19 angeordnet sein bzw. werden.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Biegeanlage | 31 | erster Abstand |
| 2 | Manipulationssystem | 32 | zweite Normalebene |
| 3 | Werkstück | 33 | zweiter Abstand |
| 4 | Biegemaschine | 34 | Mittelebene |
| 5 | Biegewerkzeug | | |
| 6 | Biegestempel | | |
| 7 | Biegegesenk | | |
| 8 | Maschinengestell | | |
| 9 | Bodenplatte | | |
| 10 | Seitenwange | | |
| 11 | Seitenwange | | |
| 12 | Querverband | | |
| 13 | Pressbalken | | |
| 14 | Pressbalken | | |
| 15 | Linearführung | | |
| 16 | Antriebsanordnung | | |
| 17 | erster Manipulator | | |
| 18 | zweiter Manipulator | | |
| 19 | Führungsanordnung | | |
| 20 | erste Achse | | |
| 21 | Basisgestell | | |
| 22 | erster Manipulatorarm | | |
| 23 | zweite Achse | | |
| 24 | zweiter Manipulatorarm | | |
| 25 | dritte Achse | | |
| 26 | dritter Manipulatorarm | | |
| 27 | vierte Achse | | |
| 28 | Halteanordnung | | |
| 29 | fünfte Achse | | |
| 30 | erste Normalebene | | |

## Patentansprüche

1. Verfahren zur direkten Übergabe von zumindest einem zu biegenden Blech oder einem aus dem Blech umgeformten Werkstück (3) bei einer Biegeanlage (1) mit zumindest einer Biegemaschine (4) mittels eines Manipulationssystems (2) von einem ersten Manipulator (17) zu zumindest einem zweiten Manipulator (18), bei dem folgende Schritte ausgeführt werden:
- Bereitstellen einer gemeinsamen Führungsanordnung (19), welche gemeinsame Führungsanordnung (19) in Richtung ihrer Längserstreckung eine gemeinsame erste Achse (20) für jeden der Manipulatoren (17, 18) definiert und jeder Manipulator (17, 18) entlang der gemeinsamen Führungsanordnung (19) in Richtung der erste Achse (20) autonom verfahrbar ist,
- Bereitstellen des ersten Manipulators (17) und zumindest des zweiten Manipulators (18), jeder der Manipulatoren (17, 18) umfasst
- ein Basisgestell (21, 21'),
- einen ersten Manipulatorarm (22, 22'), wobei jeder der ersten Manipulatorarme (22, 22') am jeweiligen Basisgestell (21, 21') um eine zweite Achse (23, 23') verschwenkbar ist,
- einen zweiten Manipulatorarm (24, 24'), wobei jeder der zweiten Manipulatorarme (24, 24') an einer vom Basisgestell (21) abgewendeten Seite am jeweiligen ersten Manipulatorarm (22, 22') um eine dritte Achse (25, 25') verschwenkbar ist,
- einen dritten Manipulatorarm (26, 26'), wobei jeder der dritten Manipulatorarme (26, 26') an einer vom Basisgestell (21, 21') abgewendeten Seite am jeweiligen zweiten Manipulatorarm (24, 24') um eine vierte Achse (27, 27') verschwenkbar ist,
- wobei die zweiten Achsen (23, 23'), die dritten Achsen (25, 25') und auch die vierten Achsen (27, 27') jeweils ausschließlich eine parallele Ausrichtung bezüglich der ersten Achse (20) aufweisen,
- eine Halteanordnung (28, 28'), welche Halteanordnung (28, 28') am jeweiligen dritten Manipulatorarm (26, 26') angeordnet oder ausgebildet ist und jede der Halteanordnungen (28, 28') um eine fünfte Achse (29, 29') verdrehbar ist, wobei jede der fünften Achsen (29, 29') eine normale Ausrichtung bezüglich der jeweiligen vierten Achse (27, 27') aufweist,
- wobei jeder der dritten Manipulatorarme (26, 26') jeweils auf der vom ersten Manipulatorarm (22, 22') abgewendeten Seite am zweiten Manipulatorarm (24, 24') angeordnet ist,
- wobei ein Blech oder ein Werkstück (3) an seiner ersten Seite mit der Halteanordnung (28) des ersten Manipulators (17) erfasst oder ergriffen wird, und
- wobei die Manipulatoren (17, 18) in Richtung der ersten Achse (20) an oder auf der gemeinsamen Führungsanordnung (19) hintereinander und in einer relativen Stellung zueinander angeordnet werden, in welcher der dritte Manipulatorarm (26) des ersten Manipulators (17) auf jener Seite des zweiten Manipulatorarms (24) angeordnet ist, welche dem zweiten Manipulator (18) zugewendet ist und der dritte Manipulatorarm (26') des zweiten Manipulators (18) auf jener Seite des zweiten Manipulatorarms (24') angeordnet ist, welche dem ersten Manipulator (17) zugewendet ist,
**dadurch gekennzeichnet,**
- **dass** die Manipulatoren (17, 18) für den Übergabevorgang unmittelbar benachbart zueinander angeordnet werden, und dabei zumindest einer der Manipulatoren (17, 18) in Richtung auf den anderen Manipulator (18, 17) verlagert wird und weiters dabei die dritten Manipulatorarme (26, 26') einander gegenüberliegend sowie deren fünften Achsen (29, 29') jeweils aufeinander zu ragend ausgerichtet werden,
- **dass** für den Übergabevorgang der erste und der zweite Manipulatorarm (22; 24) des ersten Manipulators (17) auf einer ersten Seite bezüglich einer in Richtung der ersten Achse (20) verlaufend ausgerichteten vertikalen Mittelebene (34) der Führungsanordnung (19) und der erste und zweite Manipulatorarm (22'; 24') des zweiten Manipulators (18) auf einer der ersten Seite gegenüberliegenden zweiten Seite der Mittelebene (34) der Führungsanordnung (19) angeordnet werden, wobei die vertikale Mittelebene (34) in einer normalen Richtung bezüglich einer Horizontalebene verläuft, und
- **dass** das selbe Blech oder Werkstück (3) an seiner der ersten Seite gegenüberliegenden zweiten Seite mit der Halteanordnung (28') des zweiten Manipulators (18) erfasst oder ergriffen wird und das Blech oder das Werkstück (3) von der Halteanordnung (28) des ersten Manipulators (17) freigegeben oder losgelassen wird.

2. Verfahren nach Anspruch 1, **dadurch gekennzeichnet, dass** der zweite Manipulatorarm (24) des ersten Manipulators (17) auf jener Seite des ersten Manipulatorarms (22) angeordnet ist, welche dem zweiten Manipulator (18) zugewendet ist.

3. Verfahren nach Anspruch 1 oder 2, **dadurch gekennzeichnet, dass** der zweite Manipulatorarm (24') des zweiten Manipulators (18) auf jener Seite des ersten Manipulatorarms (22') angeordnet ist, welche dem ersten Manipulator (17) zugewendet ist.

4. Verfahren nach einem der vorhergehenden Ansprüche, **dadurch gekennzeichnet, dass** für den Übergabevorgang jeweils die fünften Achsen (29, 29') der dritten Manipulatorarme (26, 26') in paralleler Ausrichtung zueinander angeordnet werden.

5. Verfahren nach einem der vorhergehenden Ansprüche, **dadurch gekennzeichnet, dass** für den Übergabevorgang jeweils die fünften Achsen (29, 29') der dritten Manipulatorarme (26, 26') in fluchtender Ausrichtung zueinander angeordnet werden.

6. Verfahren nach einem der vorhergehenden Ansprüche, **dadurch gekennzeichnet, dass** die erste Achse (20) der Führungsanordnung (19) in paralleler Ausrichtung bezüglich einer von einer Biegemaschine (4) der Biegeanlage (1) definierten Biegelinie ausgerichtet ist.

7. Manipulationssystem (2) für eine Biegeanlage (1) umfassend zumindest eine Biegemaschine (4), zur direkten Übergabe von zumindest einem zu biegenden Blech oder einem aus dem Blech umgeformten Werkstück (3) von einem ersten Manipulator (17) zu zumindest einem zweiten Manipulator (18), das Manipulationssystem (2) umfasst
- eine gemeinsame Führungsanordnung (19), welche gemeinsame Führungsanordnung (19) in Richtung ihrer Längserstreckung eine gemeinsame erste Achse (20) für jeden der Manipulatoren (17, 18) definiert und jeder Manipulator (17, 18) des Manipulationssystems (2) entlang der gemeinsame Führungsanordnung (19) in Richtung der erste Achse (20) autonom verfahrbar ist,
- der erste Manipulator (17) und der zumindest eine zweiter Manipulator (18) umfassen jeweils
- ein Basisgestell (21, 21'),
- einen ersten Manipulatorarm (22, 22'), wobei jeder der ersten Manipulatorarme (22, 22') am jeweiligen Basisgestell (21, 21') um eine zweite Achse (23, 23') verschwenkbar ist,
- einen zweiten Manipulatorarm (24, 24'), wobei jeder der zweiten Manipulatorarme (24, 24') an einer vom Basisgestell (21, 21') abgewendeten Seite am jeweiligen ersten Manipulatorarm (22, 22') um eine dritte Achse (25) verschwenkbar ist,
- einen dritten Manipulatorarm (26, 26'), wobei jeder der dritten Manipulatorarme (26, 26') an einer vom Basisgestell (21, 21') abgewendeten Seite am jeweiligen zweiten Manipulatorarm (24, 24') um eine vierte Achse (27, 27') verschwenkbar ist,
- wobei die zweiten Achsen (23, 23'), die dritten Achsen (25, 25') und auch die vierten Achsen (27, 27') jedes Manipulators (17, 18) jeweils ausschließlich eine parallele Ausrichtung bezüglich der ersten Achse (20) aufweisen,
- eine Halteanordnung (28, 28'), welche Halteanordnung (28, 28') am jeweiligen dritten Manipulatorarm (26, 26') angeordnet oder ausgebildet ist und jede der Halteanordnungen (28, 28') um eine fünfte Achse (29, 29') verdrehbar ist, wobei jede der fünften Achsen (29, 29') eine normale Ausrichtung bezüglich der jeweiligen vierten Achse (27, 27') aufweist, wobei
- jeder der dritten Manipulatorarme (26, 26') jeweils auf der vom ersten Manipulatorarm (22, 22') abgewendeten Seite am zweiten Manipulatorarm (24, 24') angeordnet ist, und wobei
- der erste Manipulator (17) und der zumindest eine zweite Manipulator (18) in Richtung der ersten Achse (20) hintereinander an oder auf der gemeinsamen Führungsanordnung (19) angeordnet sind, - wobei der dritte Manipulatorarm (26) des ersten Manipulators (17) auf jener Seite des zweiten Manipulatorarms (24) angeordnet ist, welche dem zweiten Manipulator (18) zugewendet ist, und
- wobei der dritte Manipulatorarm (26') des zweiten Manipulators (18) auf jener Seite des zweiten Manipulatorarms (24') angeordnet ist, welche dem ersten Manipulator (17) zugewendet ist, insbesondere zur Durchführung des direkten Übergabeverfahrens nach einem der vorhergehenden Ansprüche,
**dadurch gekennzeichnet,**
- **dass** die Manipulatoren (17, 18) für den Übergabevorgang unmittelbar benachbart zueinander angeordnet sind, und dabei die dritten Manipulatorarme (26, 26') einander gegenüberliegend sowie deren fünfte Achsen (29, 29') jeweils aufeinander zu ragend ausgerichtet sind, und
- **dass** für den Übergabevorgang der erste und der zweite Manipulatorarm (22; 24) des ersten Manipulators (17) auf einer ersten Seite bezüglich einer in Richtung der ersten Achse (20) verlaufend ausgerichteten vertikalen Mittelebene (34) der Führungsanordnung (19) und der erste und zweite Manipulatorarm (22'; 24') des zweiten Manipulators (18) auf einer der ersten Seite gegenüberliegenden zweiten Seite der Mittelebene (34) der Führungsanordnung (19) angeordnet sind, wobei die vertikale Mittelebene (34) in einer normalen Richtung bezüglich einer Horizontalebene verläuft.

8. Manipulationssystem (2) nach Anspruch 7, **dadurch gekennzeichnet, dass** der zweite Manipulatorarm (24) des ersten Manipulators (17) auf jener Seite des ersten Manipulatorarms (22) angeordnet ist, welche dem zweiten Manipulator (18) zugewendet ist.

9. Manipulationssystem (2) nach Anspruch 7 oder 8, **dadurch gekennzeichnet, dass** der zweite Manipulatorarm (24') des zweiten Manipulators (18) auf jener Seite des ersten Manipulatorarms (22') angeordnet ist, welche dem ersten Manipulator (17) zugewendet ist.

10. Manipulationssystem (2) nach einem der Ansprüche 7 bis 9, **dadurch gekennzeichnet, dass** die fünfte Achse (29) des ersten Manipulators (17) in einer ersten Normalebene (30) bezüglich der ersten Achse (20) verlaufend angeordnet ist und die erste Normalebene (30) vom Basisgestell (21) des ersten Manipulators (17) in Richtung der ersten Achse (20) sowie in Richtung auf den zweiten Manipulator (18) um einen ersten Abstand (31) beabstandet angeordnet ist.

11. Manipulationssystem (2) nach einem der Ansprüche 7 bis 10, **dadurch gekennzeichnet, dass** die fünfte Achse (29') des zweiten Manipulators (18) in einer zweiten Normalebene (32) bezüglich der ersten Achse (20) verlaufend angeordnet ist und die zweite Normalebene (32) vom Basisgestell (21') des zweiten Manipulators (18) in Richtung der ersten Achse (20) sowie in Richtung auf den ersten Manipulator (17) um einen zweiten Abstand (33) beabstandet angeordnet ist.

12. Manipulationssystem (2) nach Anspruch 10 und 11, **dadurch gekennzeichnet, dass** eine Summe des ersten Abstands (31) zuzüglich des zweiten Abstands (33) zumindest einer größten Abmessung eines der dritten Manipulatorarme (26, 26') in Richtung der ersten Achse (20) entspricht.

13. Biegeanlage (1) umfassend zumindest eine Biegemaschine (4) und ein Manipulationssystem (2) zur direkten Übergabe von zumindest einem zu biegenden Blech oder einem aus dem Blech umgeformten Werkstück (3) von einem ersten Manipulator (17) zu zumindest einem zweiten Manipulator(18), **dadurch gekennzeichnet, dass** das Manipulationssystem (2) nach einem der Ansprüche 7 bis 12 ausgebildet ist.

## Claims

1. A method for directly transferring at least one sheet metal to be bent or one workpiece (3) formed from the sheet metal from a first manipulator (17) to at least one second manipulator (18) by means of a manipulation system (2) in a bending installation (1) having at least one bending machine (4), in which the following steps are carried out:
- providing a common guide arrangement (19), which common guide arrangement (19) defines a common first axis (20) for each of the manipulators (17) in the direction of its longitudinal extension, and each manipulator (17, 18) is autonomously displaceable along the common guide arrangement (19) in the direction of the first axis (20),
- providing the first manipulator (17) and at least the second manipulator (18), each of the manipulators (17, 18) comprising
- a base frame (21, 21'),
- a first manipulator arm (22, 22'), wherein each of the first manipulator arms (22, 22') is pivotable about a second axis (23, 23') on the respective base frame (21, 21'),
- a second manipulator arm (24, 24'), wherein each of the second manipulator arms (24, 24') is pivotable about a third axis (25, 25') on the respective first manipulator arm (22, 22`) on a side facing away from the base frame (21),
- a third manipulator arm (26, 26'), wherein each of the third manipulator arms (26, 26') is pivotable about a fourth axis (27, 27') on the respective second manipulator arm (24, 24') on a side facing away from the base frame (21, 21'),
- wherein the second axes (23, 23'), the third axes (25, 25'), and also the fourth axes (27, 27') are each exclusively in parallel orientation with respect to the first axis (20),
- a holding arrangement (28, 28'), which holding arrangement (28, 28') is arranged or formed on the respective third manipulator arm (26, 26'), and each of the holding arrangements (28, 28') is rotatable about a fifth axis (29, 29'), wherein each of the fifth axes (29, 29') is in a perpendicular orientation with respect to the respective fourth axis (27, 27'),
- wherein each of the third manipulator arms (26, 26') is arranged on the second manipulator arm (24, 24`) on the side facing away from the first manipulator arm (22, 22'),
- wherein a sheet metal or a workpiece (3) is grasped or gripped with the holding arrangement (28) of the first manipulator (17) on its first side, and
- wherein the manipulators (17, 18) are arranged in succession in the direction of the first axis (20) at or on the common guide arrangement (19) and in a relative position to one another, in which the third manipulator arm (26) of the first manipulator (17) is arranged on that side of the second manipulator arm (24) which faces the second manipulator (18), and the third manipulator arm (26') of the second manipulator (18) is arranged on that side of the second manipulator arm (24`) which faces the first manipulator (17), **characterized in that**
- the manipulators (17, 18) are arranged so as to directly adjoin one another for the transfer process, and in doing so, at least one of the manipulators (17, 18) is moved in the direction towards the other manipulator (18, 17) and moreover, in doing so, the third manipulator arms (26, 26') are oriented to be opposite one another and their fifth axes (29, 29') are oriented, in each case, to project towards one another,
- that for the transfer process, the first and the second manipulator arm (22; 24) of the first manipulator (17) are arranged on a first side with respect to a vertical central plane (34) of the guide arrangement (19), which central plane (34) is oriented so as to extend in the direction of the first axis (20), and the first and second manipulator arm (22'; 24') of the second manipulator (18) are arranged on a second side of the central plane (34) of the guide arrangement (19) opposite the first side, wherein the vertical central plane (34) extends in a perpendicular direction with respect to a horizontal plane, and
- the same sheet metal or workpiece (3) is grasped or gripped with the holding arrangement (28') of the second manipulator (18) on its second side opposite the first side, and the sheet metal or the workpiece (3) is released or let go from the holding arrangement (28) of the first manipulator (17).

2. The method according to claim 1, **characterized in that** the second manipulator arm (24) of the first manipulator (17) is arranged on that side of the first manipulator arm (22) which faces the second manipulator (18).

3. The method according to claim 1 or 2, **characterized in that** the second manipulator arm (24`) of the second manipulator (18) is arranged on that side of the first manipulator arm (22') which faces the first manipulator (17).

4. The method according to one of the preceding claims, **characterized in that**, for the transfer process, in each case the fifth axes (29, 29') of the third manipulator arms (26, 26') are arranged in a parallel orientation relative to one another.

5. The method according to one of the preceding claims, **characterized in that**, for the transfer process, in each case the fifth axes (29, 29') of the third manipulator arms (26, 26') are arranged in an aligning orientation with respect to one another.

6. The method according to one of the preceding claims, **characterized in that** the first axis (20) of the guide arrangement (19) is in a parallel orientation with respect to a bending line defined by a bending machine (4) of the bending installation (1).

7. A manipulation system (2) for a bending installation (1) comprising at least one bending machine (4), for the direct transfer of at least one sheet metal to be bent or one workpiece (3) formed from the sheet metal from a first manipulator (17) to at least one second manipulator (18), the manipulation system (2) comprising
- - a common guide arrangement (19), which common guide arrangement (19) defines a common first axis (20) for each of the manipulators (17, 18) in the direction of its longitudinal extension, and each manipulator (17, 18) of the manipulation system (2) is autonomously displaceable along the common guide arrangement (19) in the direction of the first axis (20),
- the first manipulator (17) and the at least one second manipulator (18) each comprise
- a base frame (21, 21'),
- a first manipulator arm (22, 22'), wherein each of the first manipulator arms (22, 22') is pivotable about a second axis (23, 23') on the respective base frame (21, 21'),
- a second manipulator arm (24, 24'), wherein each of the second manipulator arms (24, 24') is pivotable about a third axis (25) on the respective first manipulator arm (22, 22') on a side facing away from the base frame (21, 21'),
- a third manipulator arm (26, 26'), wherein each of the third manipulator arms (26, 26') is pivotable about a fourth axis (27, 27') on the respective second manipulator arm (24, 24') on a side facing away from the base frame (21, 21'),
- wherein the second axes (23, 23'), the third axes (25, 25'), and also the fourth axes (27, 27') of each manipulator (17, 18) are each exclusively in parallel orientation with respect to the first axis (20),
- a holding arrangement (28, 28'), which holding arrangement (28, 28') is arranged or formed on the respective third manipulator arm (26, 26'), and each of the holding arrangements (28, 28') is rotatable about a fifth axis (29, 29'), wherein each of the fifth axes (29, 29') is in a perpendicular orientation with respect to the respective fourth axis (27, 27'), wherein
- each of the third manipulator arms (26, 26') is arranged on the second manipulator arm (24, 24`) on the side facing away from the first manipulator arm (22, 22'), and wherein
- the first manipulator (17) and the at least one second manipulator (18) are arranged in succession at or on the common guide arrangement (19) in the direction of the first axis (20),
- wherein the third manipulator arm (26) of the first manipulator (17) is arranged on that side of the second manipulator arm (24) which faces the second manipulator (18), and
- wherein the third manipulator arm (26') of the second manipulator (18) is arranged on that side of the second manipulator arm (24`) which faces the first manipulator (17), in particular for carrying out the direct transfer process according to one of the preceding claims,
**characterized in that**
- the manipulators (17, 18) are arranged so as to directly adjoin one another for the transfer process, and in doing so, the third manipulator arms (26, 26') are oriented so as to be opposite one another and their fifth axes (29, 29') are oriented, in each case, to project towards one another, and
- for the transfer process, the first and the second manipulator arm (22; 24) of the first manipulator (17) are arranged on a first side with respect to a vertical central plane (34) of the guide arrangement (19), which central plane (34) is oriented so as to extend in the direction of the first axis (20), and the first and second manipulator arm (22'; 24') of the second manipulator (18) are arranged on a second side of the central plane (34) of the guide arrangement (19) opposite the first side, wherein the vertical central plane (34) extends in a perpendicular direction with respect to a horizontal plane.

8. The manipulation system (2) according to claim 7, **characterized in that** the second manipulator arm (24) of the first manipulator (17) is arranged on that side of the first manipulator arm (22) which faces the second manipulator (18).

9. The manipulation system (2) according to claim 7 or 8, **characterized in that** the second manipulator arm (24`) of the second manipulator (18) is arranged on that side of the first manipulator arm (22') which faces the first manipulator (17).

10. The manipulation system (2) according to claims 7 to 9, **characterized in that** the fifth axis (29) of the first manipulator (17) is arranged to extend in a first perpendicular plane (30) with respect to the first axis (20), and the first perpendicular plane (30) is arranged so as to be spaced apart from the base frame (21) of the first manipulator (17) by a first distance (31) in the direction of the first axis (20) as well as in the direction towards the second manipulator (18).

11. The manipulation system (2) according to one of claims 7 to 10, **characterized in that** the fifth axis (29') of the second manipulator (18) is arranged to extend in a second perpendicular plane (32) with respect to the first axis (20), and the second perpendicular plane (32) is arranged so as to be spaced apart from the base frame (21') of the second manipulator (18) by a second distance (33) in the direction of the first axis (20) as well as in the direction towards the first manipulator (17).

12. The manipulation system (2) according to claims 10 and 11, **characterized in that** a sum of the first distance (31) plus the second distance (33) is equivalent at least to a greatest dimension of one of the third manipulator arms (26, 26') in the direction of the first axis (20).

13. A bending installation (1) comprising at least a bending machine (4) and a manipulation system (2) for directly transferring at least one sheet metal to be bent or one workpiece (3) formed from the sheet metal from a first manipulator (17) to at least one second manipulator (18), **characterized in that** the manipulation system (2) is designed according to one of claims 7 to 12.

## Revendications

1. Procédé pour le transfert direct d'au moins une tôle à plier ou d'une pièce (3) façonnée à partir de la tôle, dans une installation de pliage (1), avec au moins une machine de pliage (4), au moyen d'un système de manipulation (2), d'un premier manipulateur (17) vers au moins un deuxième manipulateur (18), dans lequel les étapes suivantes sont exécutées :
- mise à disposition d'un dispositif de guidage commun (19), ce dispositif de guidage commun (19) définissant, en direction de son extension longitudinale, un premier axe commun (20) pour chacun des manipulateurs (17, 18) et chaque manipulateur (17, 18) étant mobile de manière autonome le long du dispositif de guidage commun (19) en direction du premier axe (20),
- mise à disposition du premier manipulateur (17) et d'au moins le deuxième manipulateur (18), chacun des manipulateurs (17, 18) comprenant
- un châssis de base (21, 21'),
- un premier bras de manipulateur (22, 22'), dans lequel chacun des premiers bras de manipulateur (22, 22') peut pivoter, au niveau du châssis (21, 21') correspondant, autour d'un deuxième axe (23, 23'),
- un deuxième bras de manipulateur (24, 24'), dans lequel chacun des deuxièmes bras de manipulateur (24, 24') peut pivoter, au niveau d'un côté opposé au châssis de base (21), sur le premier bras de manipulateur (22, 22') correspondant, autour d'un troisième axe (25, 25'),
- un troisième bras de manipulateur (26, 26'), dans lequel chacun des troisièmes bras de manipulateur (26, 26') peut pivoter, au niveau d'un côté opposé au châssis de base (21, 21'), sur le deuxième bras de manipulateur (24, 24'), autour d'un quatrième axe (27, 27'),
- dans lequel les deuxièmes axes (23, 23'), les troisièmes axes (25, 25') ainsi que les quatrièmes axes (27, 27') présentent chacun exclusivement une orientation parallèle par rapport au premier axe (20),
- un dispositif de maintien (28, 28'), ce dispositif de maintien (28, 28') est disposé ou réalisé au niveau du troisième bras de manipulateur (26, 26') correspondant et chacun des dispositifs de maintien (28, 28') peut tourner autour d'un cinquième axe (29, 29'), dans lequel chacun des cinquièmes axes (29, 29') présente une orientation normale par rapport au quatrième axe (27, 27') correspondant,
- dans lequel chacun des troisièmes bras de manipulateur (26, 26') est disposé sur le côté opposé au premier bras de manipulateur (22, 22') sur le deuxième manipulateur (24, 24'),
- dans lequel une tôle ou une pièce (3) est saisie ou prise au niveau de son premier côté avec le dispositif de maintien (28) du premier manipulateur (17) et
- dans lequel les manipulateurs (17, 18) sont disposés l'un derrière l'autre en direction du premier axe (20) au niveau ou sur le dispositif de guidage commun (19), et dans une position relative l'un par rapport à l'autre, dans laquelle le troisième bras de manipulateur (26) du premier manipulateur (17) est disposé du côté du deuxième bras de manipulateur (24) qui est orienté vers le deuxième manipulateur (18) et le troisième bras de manipulateur (26') du deuxième manipulateur (18) est disposé sur le côté du deuxième bras de manipulateur (24') qui est orienté vers le premier manipulateur (17),
**caractérisé en ce que**
- les manipulateurs (17, 18) pour le processus de transfert sont disposés de manière immédiatement adjacente entre eux et au moins un des manipulateurs (17, 18) est déplacé en direction de l'autre manipulateur (18, 17) et, en outre, les troisièmes bras de manipulateur (26, 26') sont orientés en face l'un de l'autre et leurs cinquièmes axes (29, 29') sont orientés de façon à dépasser respectivement l'un vers l'autre.
- pour le processus de transfert, les premier et deuxième bras de manipulateur (22 ; 24) du premier manipulateur (17) sont disposés sur un premier côté par rapport à un plan central vertical (34) du dispositif de guidage (19), orienté de façon à s'étendre en direction du premier axe (20) et les premier et deuxième bras de manipulateur (22' ; 24') du deuxième manipulateur (18) sont disposés sur un deuxième côté, opposé au premier côté, du plan central (34) du dispositif de guidage (19), dans lequel le plan central vertical (34) s'étend dans une direction normale par rapport à un plan horizontal et
- la même tôle ou pièce (3) est saisie ou prise, au niveau de son deuxième côté opposé au premier côté, avec le dispositif de maintien (28') du deuxième manipulateur (18) et la tôle ou la pièce (3) est libérée ou relâchée par le dispositif de maintien (28) du premier manipulateur (17).

2. Procédé selon la revendication 1, **caractérisé en ce que** le deuxième bras de manipulateur (24) du premier manipulateur (17) est disposé sur le côté du premier bras de manipulateur (22) qui est orienté vers le deuxième manipulateur (18).

3. Procédé selon la revendication 1 ou 2, **caractérisé en ce que** le deuxième bras de manipulateur (24') du deuxième manipulateur (18) est disposé sur le côté du premier bras de manipulateur (22') qui est orienté vers le premier manipulateur (17).

4. Procédé selon l'une des revendications précédentes, **caractérisé en ce que**, pour le processus de transfert, les cinquièmes axes (29, 29') des troisièmes bras de manipulateur (26, 26') sont disposés respectivement avec une orientation parallèle entre eux.

5. Procédé selon l'une des revendications précédentes, **caractérisé en ce que**, pour le processus de transfert, les cinquièmes axes (29, 29') des troisièmes bras de manipulateur (26, 26') sont disposés respectivement avec une orientation alignée entre eux.

6. Procédé selon l'une des revendications précédentes, **caractérisé en ce que**, pour le premier axe (20) du dispositif de guidage (19) est disposée dans une orientation parallèle par rapport à une ligne de pliage définie par une machine de pliage (4) de l'installation de pliage (1).

7. Système de manipulation (2) pour une installation de pliage (1) comprenant au moins une machine de pliage (4), pour le transfert direct d'au moins une tôle à plier ou d'une pièce (3) façonnée à partir de la tôle d'un premier manipulateur (17) vers au moins un deuxième manipulateur (18), ce système de manipulation (2) comprenant :
- un dispositif de guidage commun (19), ce dispositif de guidage commun (19) définissant, en direction de son extension longitudinale, un premier axe commun (20) pour chacun des manipulateurs (17, 18) et chaque manipulateur (17, 18) du système de manipulation (2) est mobile de manière autonome le long du dispositif de guidage commun (19) en direction du premier axe (20),
- le premier manipulateur (17) et l'au moins un deuxième manipulateur (18) comprennent chacun
- un châssis de base (21, 21'),
- un premier bras de manipulateur (22, 22'), dans lequel chacun des premiers bras de manipulateurs (22, 22') peut pivoter, au niveau du châssis de base (21, 21') correspondant, autour d'un deuxième axe (23, 23'),
- un deuxième bras de manipulateur (24, 24'), dans lequel chacun des deuxièmes bras de manipulateur (24, 24') peut pivoter, au niveau d'un côté opposé au châssis de base (21, 21'), sur le premier bras de manipulateur (22, 22') correspondant, autour d'un troisième axe (25),
- un troisième bras de manipulateur (26, 26'), dans lequel chacun des troisièmes bras de manipulateur (26, 26') peut pivoter, au niveau d'un côté opposé au châssis de base (21, 21'), sur le deuxième bras de manipulateur (24, 24'), autour d'un quatrième axe (27, 27'),
- dans lequel les deuxièmes axes (23, 23'), les troisièmes axes (25, 25') ainsi que les quatrièmes axes (27, 27') de chaque manipulateur (17, 18) présentent chacun exclusivement une orientation parallèle par rapport au premier axe (20),
- un dispositif de maintien (28, 28'), ce dispositif de maintien (28, 28') est disposé ou réalisé au niveau du troisième bras de manipulateur (26, 26') correspondant et chacun des dispositifs de maintien (28, 28') peut tourner autour d'un cinquième axe (29, 29'), dans lequel chacun des cinquièmes axes (29, 29') présente une orientation normale par rapport au quatrième axe (27, 27') correspondant, dans lequel
- chacun des troisièmes bras de manipulateur (26, 26') est disposé sur le côté opposé au premier bras de manipulateur (22, 22') sur le deuxième manipulateur (24, 24'),
- le premier manipulateur (17) et l'au moins un deuxième manipulateur (18) sont disposés l'un derrière l'autre en direction du premier axe (20) au niveau ou sur le dispositif de guidage commun (19), et dans une position relative l'un par rapport à l'autre, dans lequel le troisième bras de manipulateur (26) du premier manipulateur (17) est disposé du côté du deuxième bras de manipulateur (24) qui est orienté vers le deuxième manipulateur (18)
- dans lequel le troisième bras de manipulateur (26') du deuxième manipulateur (18) est disposé sur le côté du deuxième bras de manipulateur (24') qui est orienté vers le premier manipulateur (17), plus particulièrement pour l'exécution du procédé de transfert direct selon l'une ds revendications précédentes,
**caractérisé en ce que**
- les manipulateurs (17, 18) pour le processus de transfert sont disposés de manière immédiatement adjacente entre eux et les troisièmes bras de manipulateur (26, 26') sont orientés en face l'un de l'autre et leurs cinquièmes axes (29, 29') sont orientés de façon à dépasser respectivement l'un vers l'autre et
- pour le processus de transfert, les premier et deuxième bras de manipulateur (22 ; 24) du premier manipulateur (17) sont disposés sur un premier côté par rapport à un plan central vertical (34) du dispositif de guidage (19), orienté de façon à s'étendre en direction du premier axe (20) et les premier et deuxième bras de manipulateur (22' ; 24') du deuxième manipulateur (18) sont disposés sur un deuxième côté, opposé au premier côté, du plan central (34) du dispositif de guidage (19), dans lequel le plan central vertical (34) s'étend dans une direction normale par rapport à un plan horizontal.

8. Système de manipulation (2) selon la revendication 7, **caractérisé en ce que** le deuxième bras de manipulateur (24) du premier manipulateur (17) est disposé sur le côté du premier bras de manipulateur (22) qui est orienté vers le deuxième manipulateur (18).

9. Système de manipulation (2) selon la revendication 7 ou 8, **caractérisé en ce que** le deuxième bras de manipulateur (24') du deuxième manipulateur (18) est disposé sur le côté du premier bras de manipulateur (22') qui est orienté vers le premier manipulateur (17).

10. Système de manipulation (2) selon l'une des revendications 7 à 9, **caractérisé en ce que** le cinquième axe (29) du premier manipulateur (17) est disposé de façon à s'étendre dans un premier plan normal (30) par rapport au premier axe (20) et le premier plan normal (30) est disposé à une première distance (31) du châssis de base (21) du premier manipulateur (17) en direction du premier axe (20) ainsi qu'en direction du deuxième manipulateur (18).

11. Système de manipulation (2) selon l'une des revendications 7 à 10, **caractérisé en ce que** le cinquième axe (29') du deuxième manipulateur (18) est disposé de façon à s'étendre dans un deuxième plan normal (32) par rapport au premier axe (20) et le deuxième plan normal (32) est disposé à une deuxième distance (33) du châssis de base (21') du deuxième manipulateur (18) en direction du premier axe (20) ainsi qu'en direction du premier manipulateur (17).

12. Système de manipulation (2) selon la revendication 10 ou 11, **caractérisé en ce qu'**une somme de la première distance (31) et de la deuxième distance (33) correspond au moins à la dimension la plus grande d'un des troisièmes bras de manipulateur (26, 26') en direction du premier axe (20).

13. Installation de pliage (1) comprenant au moins une machine de pliage (4) et un système de manipulation (2) pour le transfert direct d'au moins une tôle à plier ou d'une pièce (3) façonnée à partir de la tôle, d'un premier manipulateur (17) vers au moins un deuxième manipulateur (18), **caractérisé en ce que** le système de manipulation (2) est conçu selon l'une des revendications 7 à 12.
